# EUROPEAN PATENT APPLICATION

(11) **EP 4 148 474 A1**
(43) Date of publication of application: **15.03.2023**
(21) Application number: 21196676.7
(22) Date of filing: 14.09.2021
(51) Int. Cl.: G02B 6/42, H04B 10/07, G02B 6/04, H04B 10/075, H04B 10/50, H04B 10/60, G02B 6/43

(54) **FIBRE-OPTIC COMMUNICATION SYSTEM AND METHOD**

(71) Applicant: Microsoft Technology Licensing, LLC, Redmond, WA 98052-6399 (US)
(72) Inventor: COSTA, Paolo, Washington, 98052-6399 (US); BALLANI, Hitesh, Washington, 98052-6399 (US); SHI, Kai, Washington, 98052-6399 (US); KARAGIANNIS, Thomas, Washington, 98052-6399 (US); KARINOU, Foteini, Washington, 98052-6399 (US); LYUTSAREV, Vasily, Washington, 98052-6399 (US)
(74) Representative: Townsend, Martyn

(57) **Abstract**

Provided is a method of calibrating a transmitter of a fibre-optic communication system. The transmitter comprises a plurality of light sources, and is coupled to at least one optical fibre. The method comprises identifying a group of light sources which are in communication with a same optical fibre; and designating the group of light sources for use as a transmitter for a communication channel. Also provided is a method of calibrating a receiver of a fibre-optic communication system; a fibre-optic transmitter; a fibre-optic receiver; and a system comprising the fibre-optic transmitter and the fibre-optic receiver.

## Description

### Background

Fibre-optic communications involve encoding data as pulses of light, which are transmitted through optical fibres from a transmitter to a receiver. Fibre-optic communication systems are used in a variety of contexts to transfer information, such as for telephone and internet communication, as well as for broadcasting television signals. Fibre optic communication systems are also widely used for intra-datacentre connectivity, where emerging workloads such as machine learning and resource disaggregation are significantly increasing network demands.

In conventional systems, precise alignment of the optical fibres with the light sources and light detectors is essential. Such systems are therefore costly to manufacture, requiring specialist packaging procedures. Further, costly light sources and receivers, such as single-mode lasers and silicon-germanium receivers are generally used. Conventional systems are also time-consuming and labour-intensive to install, and cannot be deployed rapidly, with long-term forecasting being necessary to ensure that network capacity meets demand.

### Summary

In one aspect, there is provided a method of calibrating a transmitter of a fibre-optic communication system, wherein the transmitter comprises a plurality of light sources, and is coupled to at least one optical fibre. The method comprises identifying a group of light sources which are in communication with a same optical fibre; and designating the group of light sources for use as a transmitter for a communication channel.

In another aspect, there is provided a method of calibrating a receiver of a fibre-optic communication system, wherein the receiver comprises a plurality of light detectors, and is coupled to at least one optical fibre. The method comprises: identifying a group of light detectors which are in communication with a same optical fibre; and designating the group of light detectors for use, collectively, as a receiver for a communication channel.

Another aspect provides a fibre-optic transmitter, comprising a plurality of light sources, the plurality of light sources being configured such that a group of light sources is selectably operable to act, collectively, as a transmitter for a communication channel.

A further aspect provides a fibre-optic receiver, comprising a plurality of light detectors, the plurality of light detectors being configured such that a group of light detectors is selectably operable to act, collectively, as a receiver for a communication channel.

A related aspect provides a fibre-optic communication system comprising the fibre-optic transmitter and the fibre-optic receiver.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

### Brief Description of the Drawings

To assist understanding of embodiments of the present disclosure and to show how such embodiments may be put into effect, reference is made, by way of example only, to the accompanying drawings in which:
Fig. 1 is a block diagram of a fibre-optic communication system;
Fig. 2 is a flow diagram outlining a method of calibrating a transmitter of a fibre-optic communication system;
Fig. 3 is a plan view of an example fibre-optic transmitter, showing a position of an optical fibre;
Fig. 4 is a flow diagram outlining a method calibrating a receiver of a fibre-optic communication system; and
Fig. 5 is a plan view of an example fibre-optic receiver, showing positions of a plurality of optical fibres.

### Detailed Description of Embodiments

The verb 'to comprise' is used herein as shorthand for 'to include or to consist of'. In other words, although the verb 'to comprise' is intended to be an open term, the replacement of this term with the closed term 'to consist of' is explicitly contemplated.

Provided herein is a fibre-optic communication system and calibration method which may allow for wider tolerances in the alignment of the optical fibres with the transmitter and receiver, and which may allow for the use of lower-cost light sources and detectors.

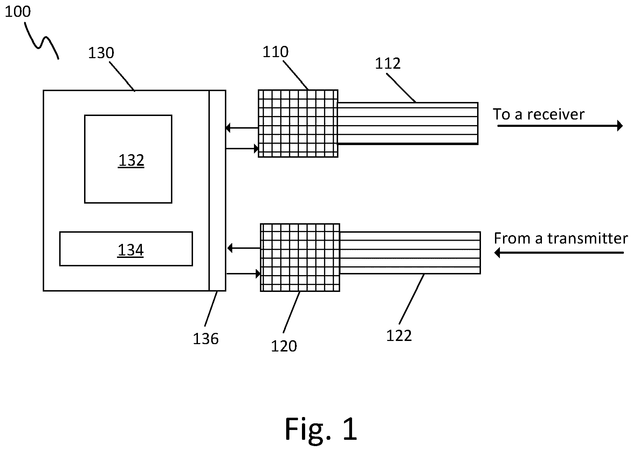

An example fibre-optic communication system 100 will first be described with reference to Fig. 1. Fig. 1 is a block diagram showing components of the system.

Fibre-optic communication system 100 includes a fibre optic transmitter 110, a fibre optic receiver 120, and a controller 130. Transmitter 110 and receiver 120 are connected to respective bundles of optical fibres 112, 122.

The fibre optic transmitter 110 comprises a plurality of light sources. Any appropriate light sources may be used. Examples of suitable light sources include light emitting diodes ("LEDs"), and lasers such as vertical cavity surface emitting lasers ("VCSELs").

The light sources may be arranged in a regular two-dimensional pattern or matrix. For example, the light sources may be arranged in a grid pattern or a honeycomb pattern. A honeycomb pattern may comprise a plurality of close-packed light sources which are hexagonal in plan. The light sources may be substantially uniformly distributed over the surface of the transmitter 110.

The light sources are used to send signals in the form of pulses of light through the optical fibres 112. The number and dimensions of the light sources may be selected such that each optical fibre will communicate with more than one light source. The number of light sources per fibre is not particularly limited and may be selected as appropriate. For example, each light source may have a surface area selected such that, on average, each optical fibre communicates with at least four of the light sources, optionally at least 6 light sources.

The total number of light sources is not particularly limited and may be selected as appropriate depending upon the number of optical fibres with which the transmitter will communicate.

An individual light source may be referred to as a "pixel". Each light source is independently operable.

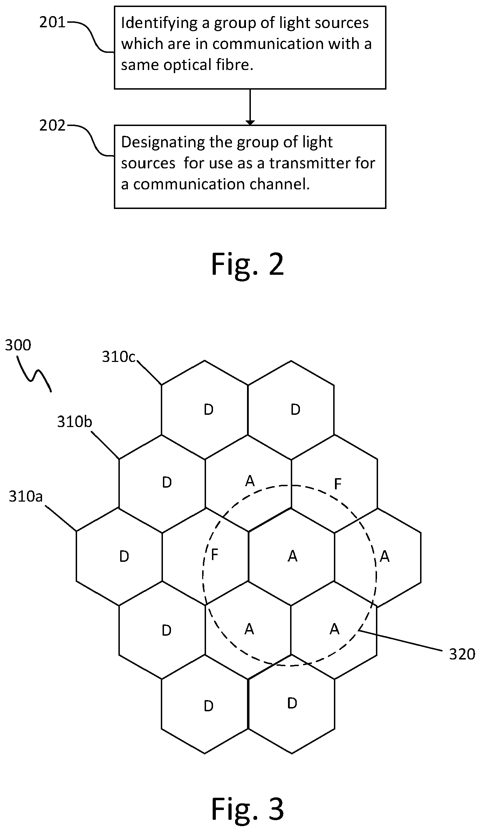

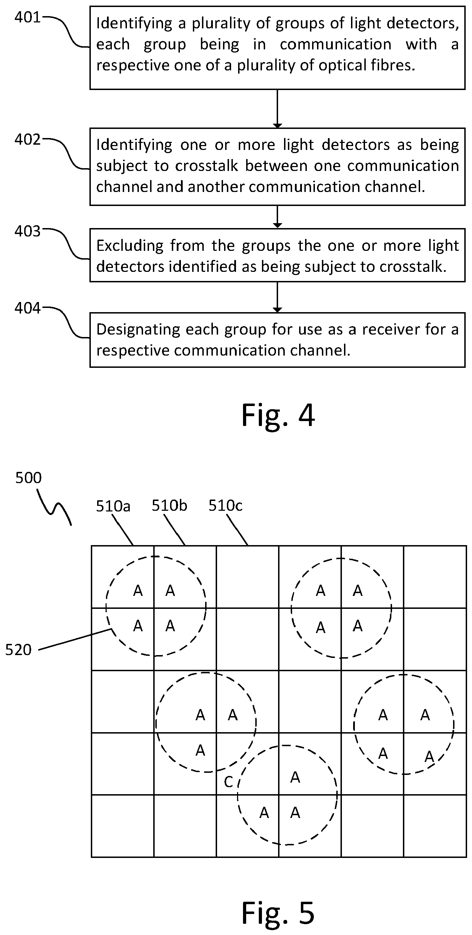

The use of multiple light sources per optical fibre allows for the use of a calibration method, such as the methods described herein with reference to Figs. 2 and 4, to compensate for any misalignment of the optical fibres with respect to the light sources. The calibration process may alternatively or additionally be used to compensate for the presence of faulty light sources. This may allow the use of inexpensive light sources manufactured to looser tolerances, and/or extend the lifespan of the system since the system can respond to failures of light sources over time.

The system 100 further includes a receiver 120. Receiver 120 includes a plurality of light detectors. Any appropriate type of light detector may be used. Illustrative examples of light detectors include P-N photodiodes, P-I-N photodiodes, and avalanche photodiodes. Preferably, the receiver comprises an image sensor, such as a CMOS sensor or charge-coupled device. In such implementations, the light detectors may be individual pixel elements of the image sensor, or groups of pixel elements (e.g., 2x2 matrices of pixel elements).

Similar to the light sources of the transmitter 110, the light detectors of the receiver 120 may be arranged in a regular two-dimensional pattern or matrix, e.g. a grid or honeycomb pattern. The number and dimensions of the light sources may be selected to provide redundancy. In other words, each optical fibre in bundle 122 may communicate with a plurality of light detectors. The number of light detectors per fibre is not particularly limited and may be selected as appropriate. For example, each light detector may have a surface area selected such that, on average, each optical fibre communicates with at least four of the light detectors, optionally at least six light detectors.

Providing redundant light detectors allows for the use of a calibration process to compensate for misalignment of the optical fibres and/or failures of individual light detectors, in a similar manner to that described above for the light sources.

The transmitter 110 and receiver 130 are each connected to a respective bundle of optical fibres 112, 122. The connections may be removable connections.

The number of optical fibres per bundle is not particularly limited and may be selected as appropriate. The number of optical fibres connected to the transmitter and the number of optical fibres connected to the receiver may be selected independently of one another.

Each optical fibre within a bundle may provide one communication channel or pathway. Alternatively, wavelength-division multiplexing may be used in order to allow an individual optical fibre to carry more than one communication channel or pathway. In wavelength-division multiplexing, different light sources associated with the optical fibre may operate at different at a different wavelength or range of wavelengths, with each wavelength or range providing a separate communication channel. A still further possibility is to use time-division multiplexing may be used to allow a single optical fibre to provide more than one communication channel over a period of time.

Each optical fibre may connect to an individually selected source or destination, optionally via one or more switches, hubs, routers, or the like. This may allow the fibre-optic communication system to communicate with a plurality of other apparatuses. A plurality of optical fibres may connect to the same source or destination if multiple parallel communication channels with that source or destination are desired.

The transmitter and/or receiver may connect to a single optical fibre, providing simplex transmission and/or reception. Alternatively, the transmitter and/or receiver may connect to a plurality of optical fibres, thereby providing space-division multiplex transmission and/or reception. In other words, a bundle of optical fibres may include a single optical fibre or a plurality of optical fibres.

The system further includes a controller 130. The controller 130 includes a processing apparatus 132 is operably linked to a data storage 134 and a bus 136. The data storage 134 stores a computer program for execution by the processing apparatus 134. Execution of the computer program by the processing apparatus 132 may cause the system 100 to perform a method as described hereinbelow.

The processing apparatus 134 may include one or more processing units implemented in one or more dies, IC (integrated circuit) packages and/or housings at one or more geographic sites.

Each of the one or more processing units may take any suitable form known in the art, e.g. a general-purpose central processing unit (CPU), or a dedicated form of co-processor or accelerator processor such as a graphics processing unit (GPU), digital signal processor (DSP), etc. Each of the one or more processing units may comprise one or more cores.

Where it is said that a computer program is executed on the processing apparatus, this may mean execution by any one or more processing units making up the processing apparatus 132.

The processing apparatus 132 typically further comprises working memory, such as random-access memory and/or one or more memory caches within the one or more processing units.

The data storage 134 may comprise one or more memory units implemented in one or more memory media in one or more housings at one or more geographic sites.

Each of the one or more memory units may employ any suitable storage medium known in the art, e.g. a magnetic storage medium such as a hard disk drive, magnetic tape drive etc.; or an electronic storage medium such as a solid state drive (SSD), flash memory or electrically erasable programmable read-only memory (EEPROM), etc.; or an optical storage medium such as an optical disk drive or glass or memory crystal based storage, etc.

Where it is said herein that some item of data is stored in data storage 134 or a region thereof, this may mean stored in any part of any one or more memory devices making up the data storage 134.

The processing apparatus 132 and data storage 134 are operably linked. The processing apparatus and data storage are configured such that processing apparatus 132 is capable of reading data from at least a portion of data storage 134, and optionally capable of writing data to at least a portion of the data storage 134. The processing apparatus 132 may communicate with the data storage 134 over a local connection, e.g. a physical data bus and/or via a network such as a local area network or the Internet. In the latter case the network connections may be wired or wireless.

The controller 130 is operably linked to the transmitter 110 and the receiver 120 via a bus 136. The nature of bus 136 is not particularly limited provided that the controller is capable of controlling operation of the transmitter and the receiver. The bus may incorporate one or more amplifiers for amplifying signals from the receiver, for example.

Various modifications may be made to the example system.

The illustrated example includes one fibre-optic transmitter and one fibre-optic receiver. Devices which include multiple transmitters and/or receivers are also contemplated.

Devices which include only fibre-optic transmitters and/or only fibre-optic receivers are also contemplated. In such implementations, the device may further include a non-fibre-optic communication link, such as a wired or wireless communication link, for receiving feedback from a further device.

A device may connect to a plurality of other devices. For example, individual ones of the optical fibres in bundles 112 and 122 may connect to separate devices.

A system which comprises a first device including a fibre-optic transmitter connected to a second device including a fibre-optic receiver via one or more optical fibres is also contemplated. The fibre-optic transmitter and receiver may be as described above. The first and second devices may each have a respective controller. The first and second device may each include a transmitter and a receiver.

A method of calibrating a transmitter of a fibre optic communication system will now be described with reference to Figs. 2 and 3. Fig. 2 is a flow diagram outlining the method. Fig. 3 is a schematic plan view of an example transmitter.

Although this example refers to the calibration of a transmitter, the principles described are also applicable to the calibration of a receiver. As described above, the layout of a fibre-optic receiver may mirror that of a fibre-optic transmitter. A receiver differs from a transmitter in that light detectors are substituted for the light sources.

At block 201, a group of light sources which are in communication with a same optical fibre are identified. In other words, a set of light sources which can be used collectively to provide a communication channel is selected.

The group of light sources may be used to provide exactly one communication channel. Alternatively, the group of light sources may be used to provide two or more multiplexed communication channels on the same optical fibre, using wavelength-division multiplexing or time-division multiplexing.

This block may comprise activating one or more light sources at a time, and determining whether light is received at a detector. By repeating this process for different light sources or combinations of light sources, a group of light sources which communicate with a target optical fibre may be identified. Optionally, one or more of the strength, stability, and wavelength of the received light signal may be measured.

The controller may implement a search process to identify the group of light sources. The search may include activating various different combinations of light sources, and evaluating any change to the received signal. If activating a particular light source causes an increase in the strength of the received signal, it may be determined that the light source is aligned with the optical fibre. The controller may store an indication in memory or in the data storage, representing whether or not a particular light source is or is not aligned with the optical fibre.

The search may be a brute-force search. In a brute-force search, arbitrarily selected combinations of light sources are tested. The combinations to be tested may comprise every possible combination. Brute-force searching may be appropriate when the number of optical fibres and/or light sources is small.

Alternatively, the stored indications may be used in conjunction with a heuristic function to reduce the size of the search space. The "search space" is the number of different combinations to be tested.

For example, in response to detecting that a particular light source or group of light sources provide a weak signal, it may be inferred that the optical fibre partially overlaps the light source. The search may then proceed to investigate nearby light sources to improve the signal strength.

The determination of differences in signal strength between different light sources may be used to inform the search. By way of illustration, if a first light source yields a weak signal, a horizontally-adjacent light source might be tested. If the horizontally adjacent light source also yields a weak signal or no signal, a light source which is vertically adjacent to the first light source might be tested in the next iteration.

The controller may store representations of a known layout of the light sources, and of an expected optical fibre geometry. These representations may be used inform the search. In implementations where the calibration process is repeated, the expected optical fibre geometry may be an optical fibre geometry measured in an earlier instance of the calibration process.

For example, an initial state for the search may comprise a group of light sources corresponding to an expected position of the target optical fibre. This may allow the group of light sources to be found within a smaller number of iterations in comparison to the use of a starting group selected arbitrarily (e.g., a predetermined group, such as a group at the centre of the transmitter) or at random.

The controller may optionally implement an optimisation process to identify a group of light sources which are in communication with the optical fibre and which satisfy one or more further constraints.

For example, the controller may identify a group having a minimum number of light sources which provides a required signal strength. Minimising the number of light sources in the group may reduce overall power usage.

Alternatively or additionally, the controller may identify a group having at least a predetermined signal stability. A signal may be considered stable when its strength varies by no more than predetermined threshold value over a predetermined period of time. When using a plurality of light sources, in particular inexpensive light sources such as LEDs, individual light sources may perform inconsistently. Avoiding the use of poorly-performing light sources may improve the reliability of communications.

The controller may be further configured to identify light sources which are faulty. A faulty light source may fail to activate; provide an unexpectedly weak signal; provide an unstable signal; or provide a signal at an undesired wavelength.

Stored representations of a known layout of light sources and expected optical fibre diameter may be used to infer that a light source is faulty. For example, it may be inferred that a light source is aligned with a centre of an optical fibre if it is detected that surrounding light sources are aligned with the optical fibre. If activating that light source fails to increase the signal strength, or increases signal strength by an amount which is less than predicted, it may be inferred that the light source is faulty. In response to determining that a light source is faulty, the controller may store an indication in the data storage and exclude that light source from use in further iterations of the calibration process and/or in the transmission of data.

In implementations where wavelength-division multiplexing is used, the detection of crosstalk between two or more wavelength-multiplexed channels on a given optical fibre when a particular light source is active may indicate that that light source is faulty.

At block 202, the group of light sources identified at block 201 is designated for use as a transmitter for one communication channel. In other words, the group is selected for use to send signals along the optical fibre. The controller may store an indication in the data storage that the identified group should be used to provide the communication channel.

The calibration process may be repeated, for example at predetermined intervals or in response to a loss of performance of a communication channel, e.g. the detection of packet loss. Light sources may develop faults over time and repeating the calibration process may provide fault-tolerance by allowing the system to detect and compensate for such failures. Further, recalibration may be useful if there are physical changes to the positions of the optical fibres, which might occur if pieces of hardware are moved or if the bundle of optical fibres is loosely connected to the transmitter.

The controller may be configured to generate an alert in response to detecting that the number of faulty light sources exceeds a threshold, or determining that the system is unable to provide a communication channel on a given optical fibre.

Although the calibration process has been described with reference to activating different combinations of light sources, a search which starts from an initial state where all of the light sources are lit and then deactivates some of the light sources is also contemplated.

The effect of the method of Fig. 2 is illustrated in Fig. 3. Fig. 3 shows a transmitter 300 including a plurality of light sources 310A, 310B, 310C. The position of an optical fibre 320 is also illustrated.

In the illustrated transmitter, the light sources 310 are arranged in a honeycomb pattern. The light sources have a regular hexagonal shape in plan, and are close-packed. Hexagonal light sources have a useful symmetry. A transmitter with an outer perimeter having an approximately circular shape can be assembled from hexagonal light sources. Optical fibres typically have a circular cross-section.

Fig. 3 illustrates that the optical fibre 320 is aligned with some, but not all, of the light sources. The position of the optical fibre 320 may be determined using the calibration process described with reference to Fig. 2.

An output of the calibration process may comprise indications that some of the light sources are not aligned with the optical fibre, and should be deactivated. These light sources are labelled 'D'. The output may further comprise an indication that a group of light sources, labelled 'A' in Fig. 3, are aligned with the optical fibre 320 and should be used to provide the communication channel, or time- or wavelength-multiplexed communication channels, to optical fibre 320. Further light sources may be predicted to be aligned with the optical fibre 320, but it may be determined that activating these light sources fails to increase the strength of the signal coupled into the optical fibre. These light sources F may be designated as faulty, and excluded from use to transmit data and from use during further calibrations.

A method of calibrating a receiver of a fibre optic communication system will now be described with reference Figs. 4 and 5. Fig. 4 is a flow diagram outlining the method. Fig. 5 is a schematic plan view of an example detector showing the positions of a plurality of optical fibres.

Although this discussion refers to a receiver, the example method may be readily adapted for use to calibrate a transmitter.

The present method is useful for systems which are coupled to a plurality of optical fibres. The spacing between two adjacent optical fibres in a bundle is referred to as the pitch of the bundle. A bundle may be designed to have a pitch which is nominally constant for each pair of adjacent optical fibres. In reality, the pitches within a bundle vary. These variations make aligning the optical fibres with specific light sources or light detectors difficult.

Variations in pitch could also lead to crosstalk. Crosstalk occurs when a light source or detector couples to more than one optical fibre. The light source or detector is then linked to two or more communication channels. Crosstalk may create large amounts of noise in the two or more communication channels, or may even lead to messages intended for one destination being detected also at another destination. The calibration process according to Fig. 4 may reduce or avoid crosstalk.

At block 401, a plurality of groups of light detectors, each group being in communication with a respective one of a plurality of optical fibres are identified.

This operation may comprise performing a search similar to that described with reference block 201 of Fig. 2 but testing light detectors as opposed to light sources. The operations may be performed in respect of multiple groups of light detectors in parallel, to allow for faster identification of groups of detectors which are aligned with optical fibres.

In implementations where signal strengths at each detector can be measured independently, another possibility is to measure the received signals across all of the light detectors, or a representative sample of the light detectors, simultaneously. A map of signal strength as a function of position may be generated based on the measurements. The positions of the optical fibres may be determined based on the map. For example, an edge detection process could be applied to the map, and groups of light detectors which are within the detected edges may be identified as being in communication with optical fibres.

At block 402, one or more light detectors which are subject to crosstalk between one communication channel and another communication channel are identified. This operation may comprise determining that activating a particular photodetector causes that photodetector to receive signals from two or more optical fibres.

In implementations where a map of signal strength as a function of position is generated, light detectors which may be subject to crosstalk may be determined based at least in part on the map, e.g. the detection of an unexpectedly large group of light detectors may correspond to multiple optical fibres, subject to crosstalk. A search process, e.g. as described with reference to block 201 of Fig. 2, may then be applied to identify which photodetectors cause the crosstalk.

At block 403, in response to identifying that one or more light detectors are subject to crosstalk, those light detector may be excluded from the groups of light detectors which are to be used to provide the communication channels.

At block 404, each group is designated for use as a receiver for a respective communication channel, similar to block 202 of Fig. 2.

Fig. 5 illustrates an example receiver 500 including a plurality of detectors 510A, 510B, 510C arranged in a rectangular grid. The positions of five optical fibres 520 are also illustrated.

The calibration method identifies detectors A which are aligned with one optical fibre, and can therefore be used to provide a communication channel with the respective optical fibre. The calibration method further identifies detector C, which is overlapped by two optical fibres. If used for communications, detector C would be subject to crosstalk. Thus, detector C is excluded from being used for communications.

It will be appreciated that the above embodiments have been described by way of example only.

More generally, according to one aspect disclosed herein, there is provided a method of calibrating a transmitter of a fibre-optic communication system. The transmitter comprises a plurality of light sources and is coupled to at least one optical fibre. The method comprises identifying a group of light sources which are in communication with a same optical fibre; and designating the group of light sources for use as a transmitter for a communication channel.

The group of light sources may be designated for use as a transmitter for exactly one communication channel. Alternatively, the group of light sources may be designated for use as a transmitter for two or more multiplexed communication channels, in particular wavelength-multiplexed communication channels.

The method may further comprise using, collectively, the group of light sources to transmit data on the communication channel.

The light sources may be arranged in a regular two-dimensional pattern, such as a grid or honeycomb.

The light sources may be LEDs. Other light sources may be used.

The surface area of each light source may be selected such that the optical fibre will communicate with at least two light sources, optionally at least four light sources, further optionally at least six light sources.

Identifying the group of light sources may, for example, comprise selecting a subset of the plurality of light sources; activating the selected subset of the plurality of light sources; and receiving a measurement of whether light is received by a receiver coupled to the optical fibre.

The subset of the plurality of light sources may be an individual light source, or two or more light sources.

In response to determining that light is received by the receiver, it may be concluded that the subset contains light sources which are in communication with the optical fibre. The determination may be repeated for other subsets of light sources.

The measurement may include an indication of the strength of a signal received by the receiver. The method may further comprise, in response to determining that the signal strength satisfies a predetermined constraint, concluding that the group is in communication with the optical fibre. The method may comprise, in response to determining that the signal strength does not satisfy the predetermined constraint, activating a new subset of the light sources, and repeating the measurement and determination operations for the new subset.

The calibration method may be repeated. For example, the calibration method may be repeated at predetermined time intervals. Alternatively or additionally, the calibration method may be repeated in response to determining that an amount of data loss on the communication channel exceeds a predetermined threshold.

The method may further comprise identifying one or more light sources as being faulty light sources, and excluding from the group the one or more faulty light sources. The one or more faulty light sources may be excluded from use if the calibration process is repeated.

Identifying the group of light sources may comprise identifying a group of light sources which are in communication with the same optical fibre and which satisfy one or more further constraints or conditions.

For example, identifying the group of light sources may comprise identifying a group of light sources which provides to a receiver a signal strength greater than or equal to a predetermined minimum signal strength. Identifying the group of light sources may further comprise identifying a group of light sources which has a power draw less than or equal to a predetermined maximum power draw.

Alternatively or additionally, the method may include measuring variations in the strength of the signal received by the receiver, and identifying the group of light sources may comprise identifying a group of light sources which are in communication with the same optical fibre and which has a level of variation of signal strength less than or equal to a predetermined threshold.

The transmitter may be coupled to a plurality of optical fibres. In such implementations, the method may further comprise identifying a plurality of groups of light sources, each group being in communication with a respective one of the plurality of optical fibres; and designating each group for use to provide a respective communication channel.

The method may further comprise identifying one or more light sources as causing crosstalk between one communication channel and another communication channel; and excluding from the groups the one or more light sources identified as causing crosstalk. A light source may cause crosstalk when it is coupled to more than one optical fibre.

In another aspect, there is provided a method of calibrating a receiver of a fibre-optic communication system. The receiver comprises a plurality of light detectors, and is coupled to at least one optical fibre. The method comprises identifying a group of light detectors which are in communication with a same optical fibre; and designating the group of light sources for use, collectively, as a receiver for one communication channel.

The method may further comprise using, collectively, the group of light sources to receive data on the communication channel.

The method of calibrating the receiver may mirror the method of calibrating the transmitter described with reference to the preceding aspect. For example, a group of light detectors which satisfies a further condition such as having a signal strength above a threshold and/or a variation of signal strength below a threshold, may be identified.

The receiver may comprise an image sensor, and the light detectors may be pixel elements of the image sensor. The image sensor may be a CMOS sensor.

Identifying the group of light detectors may include measuring a signal strength received by each light detector, and generating a map of the signal strengths. Identifying the group of light detectors may further include detecting edges in the map.

The method may further comprise identifying one or more light detectors as being faulty light detectors, and excluding from the group the one or more faulty light detectors.

Identifying the group of light sources may comprise identifying a group of light detectors which detects a signal from a transmitter having a strength greater than or equal to a predetermined minimum signal strength.

The receiver may be coupled to a plurality of optical fibres. In such implementations, the method may further comprise identifying a plurality of groups of light detectors, each group being in communication with a respective one of the plurality of optical fibres; and designating each group for use as a receiver for a respective communication channel.

The method may further comprise identifying one or more light detectors as being subject to crosstalk between one communication channel and another communication channel; and excluding from the groups the one or more light detectors identified as being subject to crosstalk.

Also provided is a method of calibrating a fibre-optic communication system. The fibre-optic communication system comprises a transmitter comprising a plurality of light sources, and a receiver comprising a plurality of light detectors. The method comprises calibrating the transmitter using a method as defined herein, and calibrating the receiver using a method as defined herein.

The transmitter and receiver may be components of separate apparatuses, e.g. a transmitting network entity and a receiving network entity. In such implementations, the transmitter is coupled to the receiver by one or more optical fibres, optionally a plurality of optical fibres.

The transmitter and receiver may be components of the same apparatus. In such implementations, the transmitter and receiver are coupled to one or more other apparatuses via optical fibres.

In a further aspect, there is provided a fibre-optic transmitter, comprising a plurality of light sources, the plurality of light sources being configured such that a group of light sources is selectably operable to act, collectively, as a transmitter for a communication channel. The communication channel may be exactly one communication channel. Alternatively, the communication channel may comprise two or more time- or wavelength-multiplexed communication channels.

Still another aspect provides a fibre-optic receiver, comprising a plurality of light detectors, the plurality of light detectors being configured such that a group of light detectors is selectably operable to act, collectively, as a receiver for a communication channel. The communication channel may be exactly one communication channel. Alternatively, the communication channel may comprise two or more time- or wavelength-multiplexed communication channels.

Another aspect provides a fibre-optic communication system comprising the fibre-optic transmitter and the fibre-optic receiver.

The transmitter, receiver, or system may include a controller configured to cause the transmitter, receiver, or system to perform a method as defined herein.

Also provided is a computer program product comprising instructions which, when executed by a processor operably connected to a fibre-optic transmitter, receiver, or communication system, causes the fibre-optic transmitter, receiver, or communication system to perform a method as defined herein. The computer program product may be embodied on a non-transitory computer-readable medium.

Other variants or use cases of the disclosed techniques may become apparent to the person skilled in the art once given the disclosure herein. The scope of the disclosure is not limited by the described embodiments but only by the accompanying claims.

## Claims

1. A method of calibrating a transmitter of a fibre-optic communication system, wherein the transmitter comprises a plurality of light sources, and is coupled to at least one optical fibre;
the method comprising:
identifying a group of light sources which are in communication with a same optical fibre; and
designating the group of light sources for use as a transmitter for a communication channel.

2. The method according to claim 1, further comprising:
identifying one or more light sources as being faulty light sources; and
excluding from the group the one or more faulty light sources.

3. The method according to claim 1 or claim 2, wherein identifying the group of light sources comprises:
identifying a group of light sources which provides to a receiver a signal strength greater than or equal to a predetermined minimum signal strength;
optionally wherein identifying the group of light sources comprises:
identifying a group of light sources which has a power draw less than or equal to a predetermined maximum power draw.

4. The method according to any preceding claim, wherein the transmitter is coupled to a plurality of optical fibres, and the method further comprises:
identifying a plurality of groups of light sources, each group being in communication with a respective one of the plurality of optical fibres; and
designating each group for use to provide a respective communication channel;
optionally wherein the method further comprises:
identifying one or more light sources as causing crosstalk between one communication channel and another communication channel; and
excluding from the groups the one or more light sources identified as causing crosstalk.

5. A method of calibrating a receiver of a fibre-optic communication system, wherein the receiver comprises a plurality of light detectors, and is coupled to at least one optical fibre; the method comprising:
identifying a group of light detectors which are in communication with a same optical fibre; and
designating the group of light detectors for use, collectively, as a receiver for one communication channel.

6. The method according to claim 5, further comprising:
identifying one or more light detectors as being faulty light detectors, and
excluding from the group the one or more faulty light detectors.

7. The method according to claim 5 or claim 6, wherein identifying the group of light sources comprises:
identifying a group of light detectors which detects a signal from a transmitter having a strength greater than or equal to a predetermined minimum signal strength.

8. The method according to any of claims 5 to 7, wherein the receiver is coupled to a plurality of optical fibres, and wherein the method further comprises:
identifying a plurality of groups of light detectors, each group being in communication with a respective one of the plurality of optical fibres;
designating each group for use as a receiver for a respective communication channel.

9. The method according to claim 8, further comprising:
identifying one or more light detectors as being subject to crosstalk between one communication channel and another communication channel; and
excluding from the groups the one or more light detectors identified as being subject to crosstalk.

10. A method of calibrating a fibre-optic communication system, wherein the fibre-optic communication system comprises a transmitter comprising a plurality of light sources, and a receiver comprising a plurality of light detectors,
which method comprises:
calibrating the transmitter using a method according to any of claims 1 to 4; and
calibrating the receiver using a method according to any of claims 5 to 9.

11. The method according to claim 10, wherein the transmitter is connected to the receiver by a plurality of optical fibres.

12. A fibre-optic transmitter, comprising a plurality of light sources, the plurality of light sources being configured such that a group of light sources is selectably operable to act, collectively, as a transmitter for a communication channel.

13. A fibre-optic receiver, comprising a plurality of light detectors, the plurality of light detectors being configured such that a group of light detectors is selectably operable to act, collectively, as a receiver for a communication channel.

14. A fibre-optic communication system comprising a fibre-optic transmitter according to claim 14 and a fibre-optic receiver according to claim 15.

15. A fibre-optic transmitter, receiver, or communication system according to claim 12, 13 or 14 respectively, further comprising a controller configured to cause the transmitter, receiver, or communication system to perform a method as defined in any of claims 1 to 10.
